Europäisches Patentamt

European Patent Office

Office européen des brevets

(19)

(11) Publication number: **0 202 028 B1**

# EUROPEAN PATENT SPECIFICATION

(45) Date of publication of patent specification: **27.12.91**   (51) Int. Cl.⁵: **B23C 5/22**

(21) Application number: **86302769.4**

(22) Date of filing: **14.04.86**

(54) Milling cutter for cutting the radioactively contaminated surface of concrete.

(30) Priority: **14.05.85 JP 71227/85 U**

(43) Date of publication of application:
**20.11.86 Bulletin  86/47**

(45) Publication of the grant of the patent:
**27.12.91 Bulletin  91/52**

(84) Designated Contracting States:
**DE FR GB**

(56) References cited:
**DE-A- 2 549 757**
**FR-A- 397 058**
**FR-A- 2 162 818**
**US-A- 1 514 709**

(73) Proprietor: **Sato Kogyo Co. Ltd.**
**No. 1-1, Sakuragi-Cho**
**Toyama-City Toyama-Prefecture(JP)**

Proprietor: **Hitachi Carbide Tools Ltd.**
**No. 13-2, Shinsen**
**Narita-City Chiba-Prefecture(JP)**

(72) Inventor: **Funakawa, Naoyoshi**
**19-6, Sengendai Nishi 1-Chome**
**Koshigaya-City Saitama-pref.(JP)**
Inventor: **Demura, Hajime**
**No. 48-8, Shiba 1-chome**
**Kawaguchi-City Saitama-pref.(JP)**
Inventor: **Nagamori, Nobuyuki**
**No. 19-10, Soya 3-Chome**
**Ichikawa-City Chiba-pref.(JP)**

(74) Representative: **Lee, Philip Graham et al**
**MARKS & CLERK 57/60 Lincoln's Inn Fields**
**London WC2A 3LS(GB)**

EP 0 202 028 B1

## Description

The present invention relates according to the precharacterising part of claim 1 to an improved milling cutter as used to cut the radioactively contaminated surface of concrete at the time of repairing and dismantling nuclear facilities.

As the number of nuclear facilities increases, it is necessary previously to study those techniques which will be needed at the sites of large-scaled repairing and dismantling works in the future.

The inventors of the present invention have disclosed from this viewpoint a technique for cutting the radioactively contaminated surface of concrete in Japanese Patent Application 58-153740 and 58-157406. We have also disclosed an improved milling cutter in Japanese Utility Model Application 59-10292.

As milling cutters for use with contaminated concrete surface cutting apparatus, there have been well known those which have carbide chips or diamond chips embedded on the outer circumferential surface of the rotating drum, but the cutting depth to which the contaminated surface of concrete is cut by these cutting apparatus ranges from 1mm to 3mm and their maximum cutting capacities per hour reach only 5m² or less. These values were not satisfactory and it was also impossible to cut aggregates in concrete.

Further, when the inserts were used up, it took a long time to exchange them with new ones and embed them on the outer circumferential surface of the drum.

Moreover, drums and inserts must be cleaned up to avoid radioactive contamination before they are removed for exchange work.

DE-A-2 549 757 as description of the closest prior art discloses a milling cutter comprising a cylindrical cutter body having arranged on its surface groups of inserts each including a cutter blade, each group of inserts being angularly pitched from a preceding group of inserts in the direction of rotation of the cutter body, each group of inserts comprising a first sub-group of at least one insert at or towards a first end of the cutter body with the blade or blades thereof slanted towards the second end of the cutter body, and a second sub-group of all the remaining plurality of inserts of the group at or towards the second end of the cutter body with the blades thereof slanted towards said first end of the cutter body, each insert of the first and second sub-groups respectively, being further in front, relative to the cutting direction, than an adjacent insert if any further from said first or respectively in the same sub-group, the cutter body providing a groove in front of each blade.

However, in DE-A-2 549 757 each blade in the second sub-group is slanted at the same angle as the line from that blade to an adjacent blade, which is not ideal for the purpose of cutting concrete and also cutting aggregates in concrete.

Also, in DE-A-2 549 757 there is no "mirror symmetry" relative to a centre plane between successive groups of blades, for avoiding any tendency of the cutter to move to one side or the other when rotated in use.

FR-A-397 058 discloses a milling cutter having a series of blades in shallow Vee-angled rows, each blade being aligned with its side of the row. Although less relevant to the present invention than the above-mentioned DE-A-2 549 757, FR-A-397 058 could be said to disclose a milling cutter comprising a cylindrical cutter body having arranged on its surface groups of inserts each including a cutter blade, each group of inserts being angularly pitched from a preceding group of inserts in the direction of rotation of the cutter body, each group of inserts comprising a first sub-group of a sub-row of inserts at or towards a first end of the cutter body with the blades thereof slanted towards the second end of the cutter body, and a second sub-group of all the remaining plurality of inserts of the group at or towards the second end of the cutter body with the blades thereof slanted towards said first end of the cutter body, each insert of the first and second sub-groups of each group being further in front, relative to the cutting direction, than an adjacent insert if any further from said first or second end respectively in the same sub-group.

The present invention provides a milling cutter having the features of claim 1 to which reference is directed.

A preferred use of such a milling cutter is for cutting radioactively-contaminated concrete at the time of repairing and dismantling nuclear facilities.

The intention of the present invention is therefore to provide an above-mentioned milling cutter which is capable of cutting the surface of concrete to 5mm or more, and also of cutting aggregates in the concrete. Other intentions are to facilitate rapid exchange of used inserts with new ones on site so as to avoid the necessity for moving the whole apparatus to somewhere else.

These and other features and merits of the present invention should become more clearly apparent from the following detailed description with reference to the accompanying drawings.

In these drawings:

Fig. 1 is a front view showing an embodiment of the present invention;

Fig. 2 is a sectional view showing the mechanism for attaching cutter inserts; and

Fig. 3 is a development showing an arrangement of the cutter inserts.

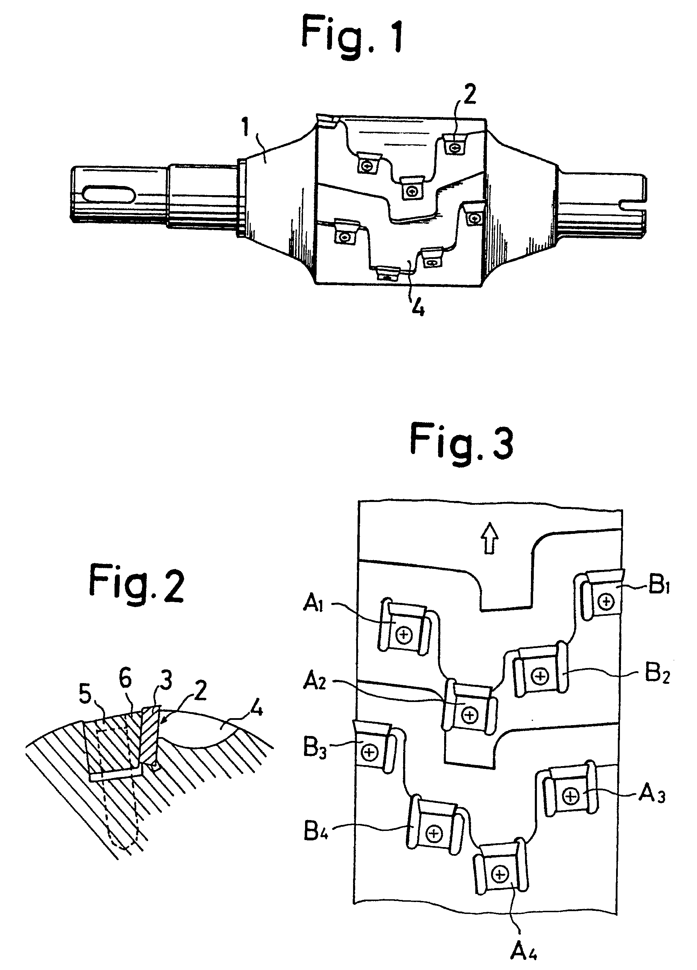

Referring now to the drawings, there is shown a cylindrical cutter body 1 having a diameter of about 120 mm and a length of about 110mm. The cutter body 1 has arranged on its surface twenty-four inserts 2 in six groups of four inserts 2 per group. For example, as shown in Fig. 3, there are inserts $A_1$, $A_2$, $B_1$, $B_2$ in a first such group, and inserts $A_3$, $A_4$, $B_3$, $B_4$ in the next following group. Each group of inserts is angularly pitched, at 60 degrees, from the preceding group of inserts 2 in the direction of rotation of the cutter body 1. Each insert 2 has a blade 3 slanted at about 5 degrees to the direction of cutting, to reduce cutting resistance and to enable the cutter body 1 to be smoothly rotated.

Each group of inserts 2 is arranged in a formation which will now be described in detail. More particularly, each group of inserts 2 is divided into two sub-groups, that is, a first sub-group $A_1$, $A_2$ and a second sub-group $B_1$, $B_2$ for the first group of inserts 2 and a first sub-group $A_3$, $A_4$ and a second sub-group $B_3$, $B_4$ for the second group of inserts 2.

The blades 3 of the sub-groups $A_1$, $A_2$ and $B_3$, $B_4$ on the left of Fig. 3 (and hence at, or towards the left-hand end of the cutter body 1) are slanted 5 degrees towards the right (that is, the right-hand end) of the cutter body 1, whilst the blades 3 of the sub-groups $B_1$, $B_2$ and $A_3$, $A_4$ on the right of Fig. 3 (and hence at, or towards the right-hand end of the cutter body 1) are slanted 5 degrees towards the left (that is, the left-hand end) of the cutter body 1.

Each of the inserts $A_1$, $B_1$, $A_3$, $B_3$ of the first and second sub-groups of each group respectively is further in front, as shown, relative to the cutting direction, and is nearer to the corresponding end of the cutter body 1, than the adjacent insert $A_2$, $B_2$, $A_4$, $B_4$ of the same sub-group.

Whereas each of the blades 3 is only slanted at 5 degrees (see above), the angle is quite steep, about 60 degrees, of each of the imaginary lines, not shown, from insert $A_1$ to insert $A_2$, from insert $B_1$ to insert $B_2$, from insert $A_3$ to insert $A_4$, and from insert $B_3$ to insert $B_4$ of each respective sub-group.

The inserts $A_1$, $A_2$ of the first sub-group of the first group are in mirror-symmetrical relationship to the inserts $A_3$, $A_4$ of the first sub-group of the second group, whilst the inserts $B_1$, $B_2$ of the second sub-group of the first group are in mirror-symmetrical relationship to the inserts $B_3$, $B_4$ of the second sub-group of the second group, relative to the middle of the cutter body 1, except for the angular pitch between the groups of inserts.

The cutter body 1 provides twenty-four grooves 4, each in front of the blades 3 of a respective group of the inserts 2, to collect dust. Because of the slanting at only 5 degrees of the blades 3, and the steeper slant at 60 degrees of the imaginary lines between inserts 2 of each of the sub-groups described above, each of the grooves is stepform in shape. The dust tends to collect near the middle of each groove 4, more particularly, just in front of the rearmost insert 2 of the group, such as $A_2$ and $A_4$ in Fig. 3.

The inserts 2 can be detached from the surface of the body 1 by turning a screw 5 one revolution and removing a wedge 6. Each insert 2 can therefore be easily exchanged for a new one.

According to the above mentioned embodiment, it can be made to cut the surface of the concrete plane, and easily determine radioactive contamination of the cut surface.

It should be understood that the present invention as claimed is not limited to the embodiment shown in the Figures but also includes the following embodiments:

1) The arrangement, location and number of the inserts 2 and the shape of the guide grooves are not limited to those shown in the Figures, various design modifications can be made to them. For example, the number of the inserts A in a group is not limited to two but may be three or more.

2) The blade 3 may be formed integral with the wedge 6, or a means for combining both the blade 3 and the wedge 6 may be prepared.

According to the milling cutter of the present invention as described above, the above-mentioned objects can be achieved. Namely,

1) since the inserts 2 are slanted towards the centre of the body and their cutting operation advances from the outer sides to the centre of the body, the thrust of the body can be prevented and the cutting rotation of the body can be smoothly performed;

2) as the result, the cutting capacity can be enhanced sufficiently to cut all of the contaminated surface of concrete, as compared with conventional milling cutters, and aggregates in concrete can be cut, thereby enabling the cutting capacity per hour to be drastically enhanced; and

3) since the blades 3 are slanted toward the centre of the body and the guide groove 4 is provided in front of them, their cutting operation advances from the outer sides to the centre portion of the body, so that dust produced can be collected to the centre portion of the body, without scattering around, thereby making it easier to collect the dust.

## Claims

1.  A milling cutter comprising a cylindrical cutter body (1) having arranged on its surface groups ($A_1$,$A_2$,$B_1$,$B_2$;$B_3$,$B_4$,$A_3$,$A_4$) of inserts (2) each including a cutter blade (3), each group of inserts (2) being angularly pitched from a preceding group of inserts (2) in the direction of rotation of the cutter body (1), each group of inserts (2) comprising a first sub-group $(A_1, A_2; A_3, A_4)$ of at least one insert (2) at or towards a first end of the cutter body (1) with the blade or blades (3) thereof slanted towards the second end of the cutter body (1), and a second sub-group $(B_1, B_2; B_3, B_4)$ of all the remaining plurality of inserts (2) of the group at or towards the second end of the cutter body (1) with the blades (3) thereof slanted towards said first end of the cutter body (1), each insert (2) of the first and second sub-groups respectively being further in front, relative to the cutting direction, than an adjacent insert (2) if any further from said first or second end respectively in the same sub-group, the cutter body (1) providing a groove (4) in front of each blade (3), characterised in that each blade (3) is substantially less steeply slanted than the line from that blade (3) to the or each adjacent insert (2) if any, in the respective sub-group, and in that each groove (4) extends across the cutter body (1) in front of all the insert blades (3) of a respective said group of inserts (2), being stepform in shape, and in that each group of inserts is in mirror-symmetrical relationship to said preceding group of inserts (2) relative to the middle of the cutter body (1), except for the angular pitch between said groups of inserts (2)

2. A milling cutter as claimed in claim 1, wherein at least the blade (3) of each insert (2) is removable.

3. A milling cutter as claimed in claim 2, wherein the blade (3) of each insert (2) is fixed by means of a removable wedge (6).

## Revendications

1. Un outil de fraisage comprenant un corps de fraise cylindrique (1) comportant sur sa surface des groupes $(A_1, A_2, B_1, B_2; B_3, B_4, A_3, A_4)$ de plaquettes (2), englobant chacune une lame (3), chaque groupe de plaquettes étant angulairement décalé par rapport à un groupe précédent de plaquettes (2) dans le sens de la rotation du corps de fraise (1), chaque groupe de plaquettes (2) comprenant un premier sous-groupe $(A_1, A_2, A_3, A_4)$ d'au moins une plaquette (2) sur une première extrémité du corps de fraise (1) ou en direction de celle-ci, la lame ou les lames (3) correspondantes étant inclinées vers la deuxième extrémité du corps de fraise (1), ainsi qu'un deuxième sous-groupe $(B_1, B_2; B_3, B_4)$ englobant la pluralité des plaquettes (2) restantes du groupe sur la deuxième extrémité du corps de fraise (1) ou en direction de celle-ci, les lames (3) correspondantes étant inclinées vers ladite première extrémité du corps de fraise (1), chaque plaquette (2) des premier et deuxième sous-groupes respectifs se trouvant plus en avant, par rapport à la direction de coupe, qu'une plaquette (2) adjacente, dans la mesure où il y en a une plus éloignée desdites première ou deuxième extrémités respectives dans le même sous-groupe, le corps de fraise (1) procurant une rainure (4) en face de chaque lame (3), caractérisé en ce que l'inclinaison de chaque lame (3) est sensiblement moins raide que celle de la ligne allant de cette lame (3) vers la plaquette adjacente ou vers chacune des plaquettes adjacentes (2), dans la mesure où il y en a plusieurs dans le sous-groupe respectif, et en ce que chaque rainure (4) s'étend à travers le corps de fraise (1) en face de toutes les lames de plaquettes (3) d'un dit groupe respectif de plaquettes (2), qu'elle a une forme étagée, et en ce que chaque groupe de plaquettes a une relation à symétrie spéculaire avec ledit groupe précédent de plaquettes (2), par rapport au centre du corps de fraise (1), à l'exception du pas angulaire entre lesdits groupes de plaquettes (2).

2. Un outil de fraisage selon la revendication 1, dans lequel au moins la lame (3) de chaque plaquette (2) est amovible.

3. Un outil de fraisage selon la revendication 2, dans lequel la lame (3) de chaque plaquette (2) est fixée par l'intermédiaire d'une clavette amovible (6).

## Patentansprüche

1. Ein Frässchneidwerkzeug, welches einen zylindrischen Schneidkörper (1) umfaßt, welcher, angeordnet auf seiner Oberfläche, Gruppen $(A_1, A_2, B_1, B_2; B_3, B_4, A_3, A_4)$ von jeweils eine Schneidklinge (3) enthaltenden Einsätzen (2) aufweist, wobei jede Gruppe von Einsätzen zu einer in der Richtung der Drehung des Schneidwerkzeugskörpers (1) vorhergehenden Gruppe von Einsätzen im Winkel geneigt ist, jede Gruppe von Einsätzen (2) eine erste Untergruppe $(A_1, A_2; A_3, A_4)$ aus wenigstens einem, an einem oder in Richtung zu einem ersten Ende des Schneidwerkzeugkörpers (1) hin angeordneten Einsatz (2), wobei ihre Klinge oder ihre Klingen (3) zu dem zweiten Ende des Schneidwerkzeugkörpers (1) hin geneigt sind, und eine zweite Untergruppe (B₁, B₂; B₃, B₄), die von allen Einsätzen aus der verbleibenden Vielzahl von Einsätzen (2) der Gruppe gebildet wird, und an dem oder in Richtung zu dem zweiten Ende des Schneidwerkzeugkörpers (1) hin angeordnet ist, umfaßt, wobei ihre Klingen in Richtung zu dem ersten Ende des Schneidwerkzeugkörpers (1) hin geneigt sind, jeder Einsatz (2) der ersten bzw. der zweiten Untergruppe weiter vorn in bezug auf die Schneidrichtung als ein benachbarter Einsatz (2) liegt, falls weiter von dem ersten bzw. zweiten Ende entfernt in der gleichen Untergruppe irgendeiner vorhanden ist, und der Schneidwerkzeugkörper (1) eine Rille (4) vor jeder Klinge (3) aufweist, **dadurch gekennzeichnet**, daß jede Klinge (3) wesentlich weniger steil geneigt als die Linie von der Klinge (3) zu dem oder jeden angrenzenden Einsatz (2) geneigt ist, falls er in der jeweiligen Untergruppe vorhanden ist, und daß jede Rille (4) sich quer über den Schneidwerkzeugkörper (1) vor allen eingesetzten Klingen (3) einer jeweiligen Gruppe von Einsätzen (2) erstreckt, und in der Form stufenförmig ausgebildet ist, und daß jede Gruppe von Einsätzen in spiegelsymmetrischer Beziehung zu der vorhergehenden Gruppe von Einsätzen (2) relativ zu der Mitte des Schneidwerkzeugkörpers (1) steht, wobei die Winkelneigung zwischen den Gruppen von Einsätzen (2) ausgenommen ist.

2. Ein Frässchneidwerkzeug nach Anspruch 1, wobei wenigstens die Klinge (3) von jedem Einsatz abnehmbar ist.

3. Ein Frässchneidwerkzeug nach Anspruch 2, wobei die Klinge (3) von jedem Einsatz (2) mit Hilfe eines abnehmbaren Keils (6) befestigt ist.

# Fig. 1

# Fig. 3

# Fig. 2